Europäisches Patentamt

European Patent Office

Office européen des brevets

(11) Veröffentlichungsnummer: **0 388 642**
**A2**

(12) **EUROPÄISCHE PATENTANMELDUNG**

(21) Anmeldenummer: 90103218.5

(22) Anmeldetag: 20.02.90

(51) Int. Cl.⁵: **G02B 6/36, G02B 6/30,**
**G02B 6/38, G02B 6/42,**
**B29C 33/00**

(30) Priorität: 18.03.89 DE 3908927

(43) Veröffentlichungstag der Anmeldung:
26.09.90 Patentblatt 90/39

(84) Benannte Vertragsstaaten:
CH DE ES FR GB IT LI NL SE

(71) Anmelder: **IOT**
**ENTWICKLUNGSGESELLSCHAFT FÜR**
**INTEGRIERTE OPTIK-TECHNOLOGIE MBH**
**Bruchsaler Strasse 22**
**D-6833 Waghäusel-Kirrlach(DE)**

(72) Erfinder: **Veigl, Iris**
**Röntgenstrasse 15**
**D-7525 Bad Schönborn 2(DE)**
Erfinder: **Baumgart, Jörg**
**Heidelberger Strasse 1**
**D-6833 Waghäusel-Kirrlach(DE)**

(54) **Mikromechanisches Bauteil.**

(57) Ein mikromechanisches Bauteil zum Ankoppeln mehrerer in einer Ebene angeordneter Lichtleitfasern an ein optisches Bauelement, das eine Anzahl optischer Wellenleiter enthält besteht aus einem Substrat in das über einen ersten Längsabschnitt Führungsnuten eingearbeitet sind, an die sich über einen zweiten Längsabschnitt ein stufenförmig erweiterter Bereich anschließt. Verwendet werden Lichtleitfasern, die mit einem Kunststoffmantel versehen sind. Dieser Mantel ist über eine dem ersten Längsabschnitt des Substrats entsprechende Länge entfernt. Über diese Länge sind die Lichtleitfasern in die Führungsnuten eingelegt, über einen daran anschließenden Teil sind die kunststoffummantelten Lichtleitfasern in den zweiten Berich des Substrats angelegt. Die Lichtleitfasern sind in beiden Bereichen des Substrats fixiert. Die von Kunststoff entmantelten Faserenden und die sie enthaltende Fläche des Bauteils liegen exakt in einer Ebene.

Fig. 2

## Mikromechanisches Bauteil

Die vorliegende Erfindung betrifft ein mikromechanisches Bauteil zum Ankoppeln mehrerer in einer Ebene angeordneter Lichtleitfasern an ein optisches Bauelement, das eine Anzahl optischer Wellenleiter enthält.

Dieses Bauelement kann beispielsweise als integriert-optisches Bauelement ausgebildet sein. Solche Bauelemente dienen beispielsweise dazu zugeführtes Licht zu modulieren, zu schalten, zwischen verschiedenen Kanälen zu verteilen oder zu verzweigen oder auch zum Messen physikalischer Größen. In jedem Fall steht an den in das Substrat des Bauelementes integrierten optischen Wellenleitern ein Signal an. Diese Signale werden in üblicher Weise mittels Lichtleitfasern weitergeleitet, zum Beispiel zu Detektoren.

Das optische Bauelement, an das angekoppelt wird, kann auch aus Lichtleitfasern bestehen, die beispielsweise ein Faser-Array bilden.

Es gibt sehr viele Vorschläge einzelne Lichtleitfasern an einen optischen Wellenleiter anzukoppeln. Sollen jedoch von einem integriert-optischen Bauelement oder einem Faser-Array gleichzeitig von mehreren Wellenleitern Signale weitergeleitet werden, so sind alle diese bekannten Vorschläge zu aufwendig und nicht mit der erforderlichen Genauigkeit zu realisieren.

Es ist aus der Veröffentlichung Bell System Technical Journal Vol. 57, No. 1, S. 91-97 vom Januar 1978 bekannt in einem Substrat aus einkristallinem Silizium Führungsnuten mit V-Profil zu erzeugen und in diese Lichtleitfasern einzulegen um ein aus einer Vielzahl von Fasern bestehendes Verbindungselement zu schaffen. Dieses Element hat den Nachteil, daß die Lichtleitfasern beim Austritt aus dem Element einer hohen Bruchgefahr unterliegen, und daß die erreichbare Genauigkeit nicht für alle Verwendungszwecke ausreicht.

Es ist die Aufgabe der vorliegenden Erfindung ein Bauteil zu schaffen, das mehrere in einer Ebene angeordnete Lichtleitfasern hochgenau an den Stellen positioniert die den Wellenleitern eines anzukoppelnden optischen Bauelementes entsprechen und das mit diesem Bauelement auf einfache Weise so in Kontakt gebracht werden kann, daß die Verluste an den Übergangstellen zwischen Wellenleitern und Lichtleitfasern minimal sind.

Diese Aufgabe wird durch ein mikromechanisches Bauteil gelöst, das nach den kennzeichnenden Merkmalen des Anspruches 1 ausgebildet ist.

Das nach der Erfindung ausgebildete Bauteil enthält über einen vorgegebenen Längenbereich Führungsnuten, die beispielsweise durch photolithographische Strukturierung in einem Substrat ausgebildet sind sowie einen stufenförmig davon abgesetzten Längenbereich zur Aufnahme der kunststoffummantelten Faserbereiche. Der Abstand der Führungsnuten ist so gewählt, daß er exakt dem Abstand der Wellenleiter des anzuschließenden integriert-optischen Bauelementes entspricht. Die Tiefe der Führungsnuten ist entsprechend dem Durchmesser der verwendeten Lichtleitfasern gewählt. Da sowohl Monomode- als auch Multimode-Lichtfasern verwendet werden, treten bei dem Bauelement nach der Erfindung Nuten sehr unterschiedlicher Tiefe auf. Die in die Führungsnuten eingelegten Fasern liegen jeweils mit etwas weniger als der Hälfte ihres Durchmessers in diesen. Dabei ist dafür gesorgt, daß unabhängig vom Faserdurchmesser die wellenleitenden Faserkerne in einer Ebene liegen.

Die verwendeten Lichtleitfasern bestehen aus einem Kern, der mit Glas von niedrigerem Brechungsindex ummantelt ist. Um die Gefahr des Brechens solcher Fasern zu vermeiden sind diese mit einem Kunststoffmantel umgeben, der üblicherweise durch Tauchen der Fasern in flüssigen Kunststoff erzeugt wird. Die Fasern mit ihrem Glasmantel weisen einen sehr genau definierten Durchmesser auf, nicht jedoch der Kunststoffmantel. Hier treten Durchmesserunterschiede von 20 -30 $\mu m$ auf. Aus diesem Grunde ist bei dem Bauteil nach der Erfindung der Kunststoffmantel an den Faserenden über einen Bereich bis zu mehreren mm Länge entfernt und die Fasern sind über diese Länge in die Führungsnuten eingelegt. Damit läßt sich eine hochgenaue Positionierung der Lichtleitfasern erreichen, welche mit einer Genauigkeit von < 3 $\mu m$ verfizierbar ist.

Bei dem Bauteil nach der Erfindung sind die Lichtleitfasern über einen Teilabschnitt der Kunststoffummantelung in dem entsprechenden Längsabschnitt des Bauteils fixiert. Damit wird erreicht, daß die Bruchgefahr im Übergangsbereich zwischen entferntem und vorhandenem Kunststoffmantel praktisch eliminiert wird.

Um das mikromechanische Bauteil nach der Erfindung mit dem zugeordneten integriert-optischen Bauteil möglichst verlustfrei koppeln zu können, ist es so ausgebildet, daß die freien Faserenden und die sie enthaltende Fläche des Bauteils exakt in einer Ebene liegen. Dabei ist es besonders vorteilhaft die freien Faserenden zu polieren, was zweckmäßig durch Polieren der Faserenden zusammen mit der entsprechenden Fläche des Bauteiles erfolgt.

Die Unteransprüche 2 - 13 geben vorteilhafte Weiterbildungen des Bauteils nach Anspruch 1 an. Dabei beziehen sich die Unteransprüche 2 und 3 auf die Ausbildung der Führungsnuten, die Unteransprüche 4 - 10 auf die Fixierung der Lichtleitfasern in den Nuten, Unteranspruch 11 auf die Herstellung der Führungsnuten und die Unteransprüche 12-13 geben Verfahren zur Herstellung des Bauteils nach Anspruch 1 an.

Die Erfindung wird im folgenden anhand der Ausführungsbeispiele darstellenden Figuren 1 - 5 näher erläutert. Dabei zeigen im einzelnen:

Fig. 1 ein Ausführungsbeispiel eines Substrates zum Positionieren mehrerer Lichtleitfasern mit unterschiedlichem Durchmesser;

Fig. 2 ein Ausführungsbeispiel bei dem neun Lichtleitfasern auf einem Substrat justiert und fixiert sind;

Fig. 3 eine Frontansicht auf die, die Faserenden enthaltende Endfläche eines weiteren Ausführungsbeispiels;

Fig. 4 eine Ansicht entsprechend Figur 3 auf ein weiteres Ausführungsbeispiel;

Fig. 5 die Kopplung eines nach der Erfindung ausgebildeten mikromechanischen Bauteils mit einem integriertoptischen Bauelement.

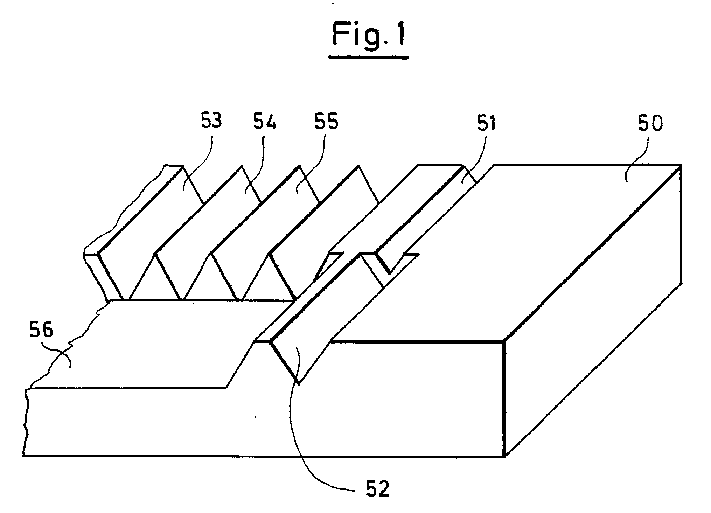

In Figur 1 ist mit (50) ein Substrat bezeichnet, das vorzugsweise aus einkristallinem Silizium besteht. Dieses Material ist anisotrop ätzbar und erlaubt es mit den üblichen Verfahren der Photolithographie sehr exakt positionierte Führungsnuten einer vorgegebenen Tiefe zu erzeugen, die hier als Nuten mit V-Profil dargestellt sind. Mit (51) ist eine solche, zur Aufnahme einer Monomode-Faser dienende Nut bezeichnet. An diese Nut schließt sich ein stufenförmig abgesetzter Längsabschnitt (52) an, der zur Aufnahme eines mit einem Kunststoffmantel umgebenen Teilbereichs der eingelegten Faser dient. Die Faser wird nach dem Einlegen in die Bereiche (51 und (52) in beiden Bereichen fixiert.

Zum Einlegen in die Nut (51) wird von der Lichtleitfaser der Kunststoffmantel entfernt. Dies kann in bekannter Weise mechanisch, chemisch oder auch durch Abbrennen mittels eines Laserstrahls geschehen. Dadurch ist erreicht, daß die reine Glasfaser in der Nut (51) die notwendige exakte Positioniergenauigkeit erreicht. Durch Fixieren eines kunststoffummantelten Teilbereichs der Faser im Bereich (52) ist erreicht, daß die Gefahr eines Faserbruches im Übergangsbereich zwischen entferntem und vorhandenen Kunststoffmantel beseitigt ist.

Mit (53,54,55) sind Führungsnuten im Substrat (50) bezeichnet, die zur Aufnahme der vom Kunststoffmantel befreiten Teilbereiche von drei Multimode-Fasern dient. An diese Nuten schließt sich ein stufenförmig abgesetzter Bereich (56) an, der zur Aufnahme und Fixierung der kunststoffummantelten Teilbereiche der Fasern dient.

Ein zweckmäßiges Verfahren zur Fixierung der Fasern im Bereich (56) besteht darin deren Kunststoffmäntel chemisch anzulösen, beispielsweise mittels Dichlormethan. Nach dem Einlegen der so behandelten Fasern werden die im Bereich (56) liegenden Faserteile eingedrückt und in dieser Position gehalten bis der Kunststoff wieder polymerisiert ist. Beim Eindrücken der Fasern wird der Kontakt in den Nuten (53-55) hergestellt, d.h. es wird eine exakte Positionierung der Fasern erreicht. Die Führungsnuten (53,54,55) sind bei diesem Verfahren zweckmäßig nicht als vollständige V-Nuten durchgeführt, d.h. sie weisen in ihrem unteren Teil keine Spitze auf.

Bei den beschriebenen Verfahren ist die Tiefe des Bereiches (56) so gewählt, daß sie etwas kleiner ist als der halbe Durchmesser des kunststoffummantelten Faserbereichs. Ist der Durchmesser des kunststoffummantelten Faserbereiches z.B. 320 $\mu$m, so wird die Tiefe des Bereiches (56) zu 145 $\mu$m gewählt.

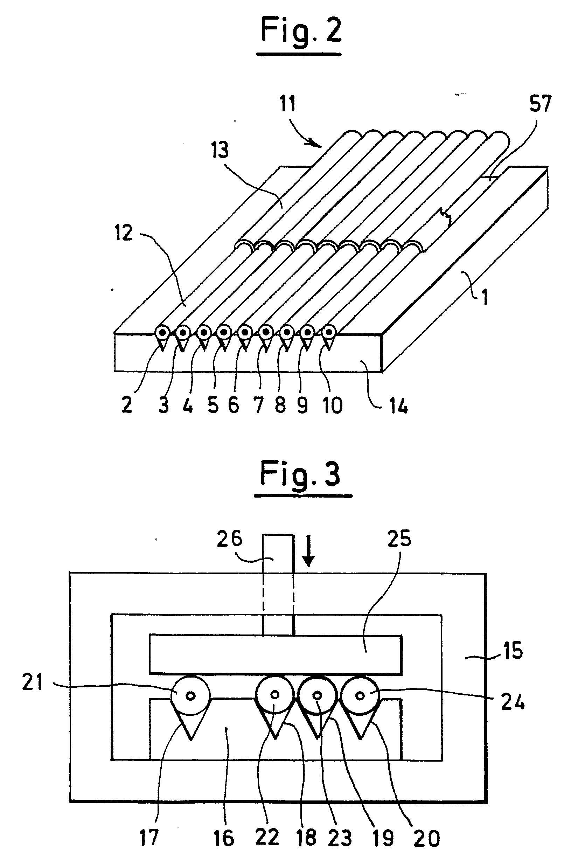

Wie Figur 2 zeigt ist von der Glasfaser (11) über einen vorderen Längenbereich (12) bis zu mehreren mmm Länge der Kunststoffmantel entfernt. Dies ist notwendig, da der Kunststoffmantel keinen gleichmäßigen Durchmesser aufweist, während der Durchmesser der eigentlichen Glasfaser sehr genau festgelegt ist. Durch das Entfernen des Kunststoffmantels gelingt es die Glasfaser (11) in der zugeordneten Nut (2) so genau zu positionieren, daß die erreichbare Positioniergenauigkeit < 3 $\mu$m beträgt.

Der hintere Teil (13) der Lichtleitfaser (11) ist mit dem Kunststoffmantel umgeben. Das Substrat (1) ist so ausgebildet, daß es in seinem hinteren Teil (57) alle Lichtleitfasern mit Kunststoffmantel aufnehmen kann. Dieser hintere kunststoffummantelte Bereich der Glasfasern wird ebenso wie der vordere Längenbereich (12) auf dem Substrat (1) fixiert. Dies kann beispielsweise durch Einkleben der Fasern mit Hilfe eines geeigneten Klebers, beispielsweise Epoxidharz geschehen. Dieser Kleber kann z.B. nach erfolgter Justierung der Fasern auf die Frontfläche aufgetragen werden und dringt dann durch Kapillarwirkung in den Bereich zwischen Fasern und Substrat ein.

Es ist auch möglich eine Fixierung der Lichtleitfasern dadurch herbeizuführen, daß diese einer metallischen Beschichtung beispielsweise mit Silber unterworfen werden. Dabei entsteht eine dünne Metallschicht, welche es ermöglicht mit Hilfe eines Warmlotes´die Fixierung der Lichtleitfasern mit einem Substrat aus Metall oder einem metallisierten Substrat zu bewirken.

Der seitliche Abstand der Lichtleitfasern (2-10) kann in einem Ausführungsbeispiel 400 $\mu$m gemessen von Mittelpunkt zu Mittelpunkt betragen.

Der Abstand der Führungsnuten im Substrat (1) ist vorwählbar und zwar entsprechend dem Verwendungszweck des Bauteiles. Die Nuten und ihr Abstand werden dabei so ausgebildet, daß die Kerne der eingelegten, justierten und fixierten Lichtleitfasern exakt in einer Ebene liegen und exakt den Lichtaustrittsflächen beispielsweise eines integriertoptischen Bauelementes gegenüberstehen, mit dem das in Figur 1 dargestellte Bauteil zu verbinden ist.

Die Fixierung der Fasern im Substrat (1) erfolgt beispielsweise durch Einkleben oder durch Einklemmen mittels eines hier nicht dargestellten Klemmelementes das auf dem Substrat (1) befestigt ist und das z.B. als Blattfeder ausgebildet sein kann.

Das in Figur 2 dargestellte Bauteil ist so ausgebildet, daß die Endfläche (14) zusammen mit den Endflächen der Lichtleitfasern (2-10) exakt eine Ebene bildet. Zu diesem Zweck wird die Fläche (14) nach erfolgter Fixierung der Lichtleitfasern bearbeitet und poliert. Durch das Polieren der Endflächen der Lichtleitfasern ist erreicht, daß der Verlust beim Übergang von Licht vom anzuschließenden Bauteil zur Lichtleitfaser minimal gehalten wird.

Es ist auch möglich ohne Poliervorgang auszukommen. Dazu werden die Lichtleitfasern in bekannter Weise gebrochen, wobei eine sehr glatte Lichtaustrittsfläche entsteht. Nach dem Einlegen der Fasern in die Führungsnuten werden diese bis zu einem in der Abschlußebene (14) liegenden Anschlag geschoben.

Die Ebene (14) muß nicht in jedem Falle exakt senkrecht zur Richtung der Lichtleitfasern liegen. Man kann beispielsweise diese Ebene (14) auch leicht geneigt anordnen um beim Ansetzen an ein zweites Bauelement Reflexionsverluste zu minimieren oder zu unterdrücken.

In Figur 3 ist in einem Gehäuse (15) ein Substrat (16) angeordnet, welches Führungsnuten (17-20) mit V-förmigem Profil enthält. In diese Nuten sind Lichtleitfasern (21-24) eingelegt und zwar über eine Länge, über die der Kunststoffmantel um die Faser entfernt ist.

Zur Fixierung der Lichtleitfasern dient im dargestellten Ausführungsbeispiel ein Oberteil (25), welches mit einer ebenen Oberfläche auf den Lichtleitfasern aufliegt und diese in den Führungsnuten fixiert. Das Oberteil (25) ist mittels einer Vorrichtung (26), die als Schraube oder Feder ausgebildet sein kann in Pfeilrichtung einstellbar und zwar so, daß eine exakte Fixierung der Lichtleitfasern erreicht ist, ohne diese einer unzulässig hohen Druckbeanspruchung zu unterwerfen.

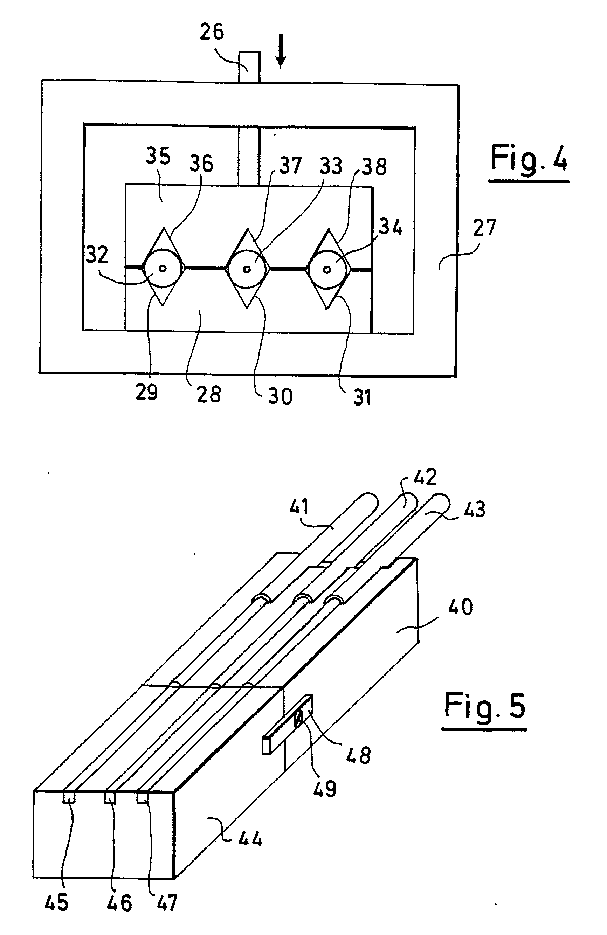

Im Ausführungsbeispiel der Figur 4 ist in einem Gehäuse (27) ein Substrat (28) angeordnet, welches nur drei Führungsnuten (29,30,31) mit V-förmigem Profil enthält. In diese Nuten sind Glasfasern (32,33,34) eingelegt. Zur Fixierung dient hier ein Oberteil (35), welches spiegelsymmetrisch zum Unterteil (28) ausgebildet ist und auch drei Nuten (36,37,38) enthält. Wie Figur 4 zeigt läßt sich damit eine besonders exakte Justierung der Lichtleitfasern erreichen.

Es ist zweckmäßig spiegelsymmetrisch ausgebildete Bauteile, d.h. also beispielsweise das Unterteil (28) und das Oberteil (35) der Figur 4 durch Abformen von einer Präzisionsform herzustellen, z. B. durch Spritzgießen. Wird als Substrat einkristallines Silizium verwendet, so können mehrere Ober- und Unterteile in einem photolithographischen Ätzvorgang gleichzeitig hergestellt werden.

In Figur 5 ist ein Bauteil (40) dargestellt, welches beispielsweise ähnlich ausgebildet ist wie in Figur 1. Dieses Bauteil enthält drei Lichtleitfasern (41,42,43), welche im Bauteil (40) fixiert sind und hinter diesem Teil flexibel beispielsweise zu Detektoren geleitet werden. Das Bauteil (40) ist im dargestellten Ausführungsbeispiel mit einem integriertoptischen Bauelement (44) verbunden, welches drei optische Wellenleiter (45,46,47) enthält. Das am Ende dieser Wellenleiter anstehende Signal tritt in die Lichtleitfasern (41,42,43) über und wird von diesen beispielsweise Detektoren oder anderen Elementen zugeleitet. Die Lichtleitfasern (41,42,43) sind exakt so positioniert, daß ihr Mittelpunkt mit dem Mittelpunkt der Wellenleiter (45,46,47) zusammenfällt. Da die Endfläche des Bauelementes (40), welche an dem Bauelement (44) anliegt poliert ist, ist ein Signalübergang ohne große Verluste möglich.

Zum Zusammenfügen der Bauteile (40) und (44) sind im dargestellten Beispiel mit dem Bauteil (40) Führungselemente verbunden, von denen nur das Element (48) sichtbar ist. Jedes der Führungselemente ist mit einem Einstellorgan versehen, das hier als Schraube (49) dargestellt ist. Nach dem Zusammenbringen der Bauteile (40) und (44) erfolgt eine exakte Justierung über eine Durchgangsmessung, wobei diese Justierung durch die Einstellorgane bewirkt wird.

Die Bauelemente (40) und (44) werden nach erfolgter Feinjustierung durch Kleben, Löten oder Klemmen miteinander verbunden.

Zweckmäßige Verfahren zur Herstellung der Bauteile nach der Erfindung sind in den Ansprüchen 12 und 13 angegeben.

## Ansprüche

1. Mikromechanisches Bauteil zum Ankoppeln mehrerer in einer Ebene angeordneter Lichtleitfasern an ein optisches Bauelement, das eine Anzahl optischer Wellenleiter enthält, wobei die aus einem Kern und einem Mantel bestehenden Lichtleitfasern mit einem Kunststoffmantel umgeben sind, dadurch gekennzeichnet, daß der Kunststoffmantel (13) an den Faserenden über einen Bereich bis zu mehreren mm Länge entfernt ist, daß das Bauteil hochpräzise Führungsnuten (2-10) enthält, in welchen die Fasern (12) über ihre vom Kunststoffmantel befreite Länge eingelegt und fixiert sind, daß die Fasern (12) über einen Teil ihrer kunststoffummantelten Länge im Bauteil fixiert sind und daß die von Kunststoff entmantelten Faserenden und die sie enthaltende Fläche (14) des Bauteils exakt in einer Ebene liegen.

2. Mikromechanisches Bauteil nach Anspruch 1, dadurch gekennzeichnet, daß das Bauteil (1) zwei stufenförmig voneinander abgesetzte Längsabschnitte aufweist, deren erster zur Aufnahme der vom Kunststoffmantel befreiten Faserlänge (12) und deren zweiter zur Aufnahme eines Teilabschnits der kunststoffummantelten Fasern (11) dient.

3. Mikromechanisches Bauteil nach Anspruch 1 und 2, dadurch gekennzeichnet, daß die Führungsnuten (51,53,54,55) je nach dem Durchmesser der einzulegenden Fasern unterschiedlich tief sind, wobei die Fasern nach erfolgtem Einlegen und Fixieren jeweils weniger als die Hälfte ihres Durchmessers in den Nuten liegen.

4. Mikromechanisches Bauteil nach Anspruch 1 bis 3, dadurch gekennzeichnet, daß es aus zwei spiegelsymmetrisch ausgebildeten Teilen (28, 35) besteht, zwischen denen die Lichtleitfasern (32 bis 34) gehaltert sind.

5. Mikromechanisches Bauteil nach Anspruch 1 bis 3, dadurch gekennzeichnet, daß ein mit Führungsnuten (17 bis 20) versehenes und ein mit glatter Oberfläche versehenes Teil (16 bzw. 25) vorgesehen ist, zwischen denen die Lichtleitfasern (21 bis 24) gehaltert sind.

6. Mikromechanisches Bauteil nach Anspruch 1 bis 3, dadurch gekennzeichnet, daß die Lichtleitfasern in einem einzigen, mit Führungsnuten versehenen Gehäuseteil fixiert sind.

7. Mikromechanisches Bauteil nach Anspruch 1-6, dadurch gekennzeichnet, daß die Lichtleitfasern in beide Abschnitte des Bauteiles eingeklebt sind.

8. Mikromechanisches Bauteil nach Anspruch 1-6, dadurch gekennzeichnet, daß die Lichtleitfasern in das Bauteil eingeklemmt sind.

9. Mikromechanisches Bauteil nach Anspruch 8, dadurch gekennzeichnet, daß der zweite Längsabschnitt eine Tiefe aufweist, die geringer ist als der Durchmesser des kunststoffummantelten Faserteils, daß die Kunststoffmäntel der einzulegenden Faser diesem Bereich vor dem Einlegen chemisch angelöst, und nach dem Einlegen und Einpressen wieder verfestigt sind.

10. Mikromechanisches Bauteil nach Anspruch 1-6, dadurch gekennzeichnet, daß die Lichtleitfasern metallisiert und das zu ihrer Aufnahme dienende Bauteil aus Metall besteht oder metallisiert ist und daß eine Verbindung durch ein Warmlot hergestellt ist.

11. Mikromechanisches Bauteil nach Anspruch 1, dadurch gekennzeichnet, daß die Führungsnuten durch photolithographische Strukturierung erzeugt sind.

12. Verfahren zur Herstellung des mikromechanischen Bauteils nach Anspruch 1 und einem oder meehreren der folgenden, dadurch gekennzeichnet, daß in einem Substrat Führungsnuten mit einem im wesentlichen V-förmigen Profil und mindestens einer daran anschließenden Stufe mit von den Nuten unterschiedlicher Tiefe erzeugt werden, daß die Lichtleitfasern über einem vorgegebenen Längenbereich von Kunststoffmantel befreit und in die Nuten eingelegt werden, wobei jeweils die anschließende kunststoffummantelte Faserbereich in die abgesetzte Stufe eingelegt wird, daß die Fasern in beiden Bereichen fixiert werden und daß anschließend die Faserstirnflächen und die sie enthaltende Fläche des Bauteils so bearbeitet werden, daß sie exakt in einer Ebene liegen.

13. Verfahren zur Herstellung des mikromechanischen Bauteils nach Anspruch 1 und einem oder mehreren der folgenden, dadurch gekennzeichnet, daß in einem Substrat Führungsnuten mit einem im wesentlichen V-förmigen Profil und zwei, jeweils an die Enden der Nuten anschließenden Stufen mit von den Nuten unterschiedlicher Tiefe erzeugt werden, daß die Lichtleitfasern über einen vorgegebenen Längenbereich vom Kunststoffmantel befreit und in die Führungsnuten eingelegt werden, wobei die beiden jeweils an den vom Kunststoffmantel befreiten Faserbereich anschließenden kunststoffummantelten Faserbereiche in die jeweiligen abgesetzten Stufen eingelegt werden, daß die Fasern in allen Bereichen fixiert werden und daß anschließend das Substrat im Mittelbereich der Führungsnuten durchtrennt wird.

# Fig.1

# Fig. 2

# Fig. 3

Fig. 4

Fig. 5